# EUROPEAN PATENT SPECIFICATION

(11) **EP 1 989 833 B1**
(45) Date of publication and mention of the grant of the patent: **17.10.2012**
(21) Application number: 07747766.9
(22) Date of filing: 14.02.2007
(51) Int. Cl.: H04L 12/18, H04L 12/28, G06Q 30/00

(54) **Method and system for transmitting messages using Bluetooth**
Verfahren und System zur Nachrichtenübertragung über Bluetooth
Procédé et système permettant de transmettre des messages en utilisant Bluetooth

(30) Priority: 14.02.2006 RO 200600095; 02.02.2007 RO 200700075
(43) Date of publication of application: 12.11.2008
(73) Proprietor: Costache, Marian Constantin, Bucuresti (RO)
(72) Inventor: Costache, Marian Constantin, Bucuresti (RO)
(74) Representative: Andronache, Paul
(86) International application number: PCT/RO2007/000001
(87) International publication number: WO 2007/094695

(56) References cited:
- EP-A- 1 321 880
- US-A1- 2002 065 778
- US-A1- 2004 004 948
- US-B1- 6 545 596
- US-B1- 6 754 484
- US-B1- 6 799 318
- TE-KAI LIN ET AL: "Interactive wireless electronic billboard" NETWORKING, SENSING AND CONTROL, 2004 IEEE INTERNATIONAL CONFERENCE ON TAIPEI, TAIWAN MARCH 21-23, 2004, PISCATAWAY, NJ, USA,IEEE, vol. 1, 21 March 2004 (2004-03-21), pages 553-558, XP010705554 ISBN: 0-7803-8193-9
- HAARTSEN J C ED - INSTITUTE OF ELECTRICAL AND ELECTRONICS ENGINEERS: "BLUETOOTH(TM): A NEW RADIO INTERFACE PROVIDING UBIQUITOS CONNECTIVITY" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY : IEEE, US, vol. VOL. 1 OF 3. CONF. 51, 15 May 2000 (2000-05-15), pages 107-111, XP000970589 ISBN: 0-7803-5719-1

## Description

The invention relates to a method and a system for transmitting advertising, visual or multimedia messages, meant to be employed in the advertising, commercial, multimedia field etc.

In order to transmit advertising, visual or multimedia messages there is known the classical system according to which figurative and/or word advertisements are graphically achieved on some panels or plastic foils. The panels or plastic foils are mounted on the lateral sides of the advertising trailer undercarriage [RO115391]. This visual advertisement may also be possibly accompanied by a sound advertising, situation in which there is a multimedia message transmission.

The previously presented messages transmission system exhibits the following disadvantages: the advertising message delivered to the subjects is a stationary one, consequently modest enough in respect of the information diversity and volume, since only one and permanently the same visual advertisement can be achieved on each one of the panels/foils, and the reception of the advertising message is available only to a relatively reduced number of subjects (pedestrians, persons at the buildings windows, car drivers or passengers), both while hauling the trailer and while parking the same, because of the traffic and/or atmospheric conditions.

For the transmission of advertising, visual or multimedia messages there is also known a stationary or mobile displaying device connected to the Internet, which allows the dissemination of information and/or of large format stationary or animated advertising images, formed automatically, in real time and remotely, through a connection to the Internet [FR 2806864]. Such a device includes a large format screen controlled from a computer connected to the Internet. This device has the following disadvantages: the dependence of broadcast advertising, visual or multimedia messages on the Internet as well as the complexities in respect of construction and ensuring the mechanical stability, electric energy supply and operation within the street traffic of a large format display etc.

There are also known a system and a method for retail advertising through short-range radio waves, in a commercial centre where, by means of short-range radio broadcasting protocol, preferably a Bluetooth protocol, and of the mobile phones provided with such protocols of the prospective buyers that are proximate the business premises, advertising can be made to products extant in that commercial centre [EP1312180]. The known system and method are used in a restricted space such as a commercial centre, consequently they have less audience to the public.

Document US 2002/0065778 A1 discloses a method for transmitting messages over Bluetooth.

The technical problem solved by the invention consists in achieving, for a relatively short but sufficient period of time, a short-range radio communication path between the advertising messages supplier and the subjects concerned.

The invention is carried out by the method of independent claim 1 and the system of independent claim 4.

The application of the invention allows the following advantages to be obtained:
- relatively simple construction and good reliability in unfavourable urbane traffic and/or atmospheric conditions;
- the message delivered to the subjects concerned is dynamic, rich in respect of information diversity and volume;
- the number of the subjects receiving the advertising message is increased significantly, as a consequence of the fact that they shall no longer watch the advertising panel directly, there being enough for them to dispose of the active "Bluetooth" connection receivers.

There is given hereinafter an embodiment of the invention in connection with Figures 1 to 4, representing:
Fig. 1, main diagram of the messages transmission system;
Fig. 2, block diagram of the system server, according to the invention;
Fig. 3, general flow chart for system operation, according to the invention;
Fig. 4, flow chart illustrating the method for step-by-step transmission of messages.

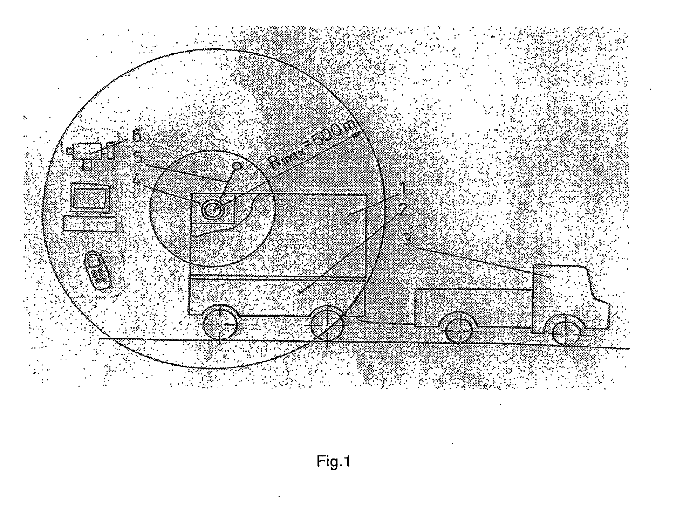

The system for transmitting messages, according to Figure 1, consists of a support frame **1** mounted on a trailer **2** hauled by a vehicle **3.** On the support frame **1,** there is mounted a server **4** provided with a transmitting aerial **5** for broadcasting the data package containing the advertising message towards some receivers **6** that can be mobile phones having built-in "Bluetooth" option, GSM terminals, personal computers or computer networks, displays, video cameras etc, with active Bluetooth connection of the subjects concerned. On the support frame **1** there is also applied an advertisement containing a part of the message to be transmitted.

The server **4** can be connected to the Internet and/or to a computer network. Thus, the messages to be transmitted can be communicated to the server **4** through the Internet or the computer network.

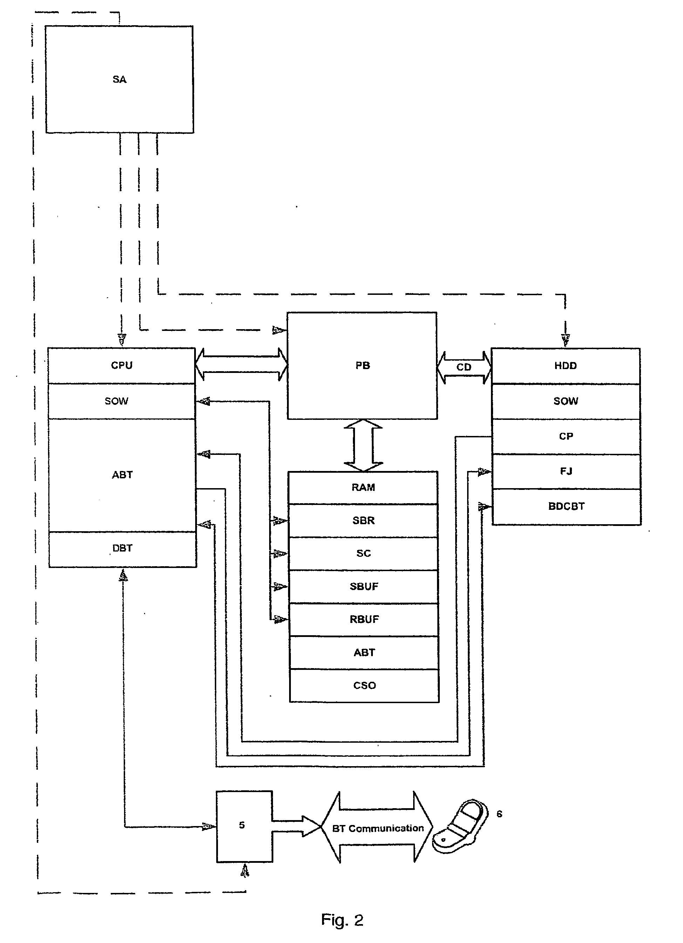

According to Figure 2, the server **4,** poor in endowments, as a specialized processor, consists of a base plate **PB** containing a processor **CPU** and a **RAM** memory, and connected to the hard disk **HDD** through a data cable **CD.** On the hard disk **HDD** there are loaded a Windows 2000/XP operating system **SOW,** advertising clip **CP,** a diary file **FJ** and a Bluetooth client database **BDCBT.** The processor **CPU** contains a part of the operating system **SOW,** part of a Bluetooth application **ABT** and a Bluetooth driver **DBT.** In the memory **RAM** there are assigned spaces for a handle broadcast socket **SBR,** a communications socket **SC** with a Bluetooth client **CBT** that is the mobile phone **6** having activated Bluetooth function, a send buffer **SBUF,** a receive buffer **RBUF,** a Bluetooth application **ABT** and operating system components **CSO.** Through the Bluetooth driver **DBT** there is connected the transmitting aerial **5** wherethrough the server **4** communicates with the mobile phone **6** having activated Bluetooth function. A supply source **SA** supplies all the electronic components of server **4.** The general system supply is 220 V alternating current voltage, but it can also operate with the direct current from the motor vehicle battery (not represented in the figure).

The hard disk **HDD** is about 7 Mb. The operating speed of processor **CPU** conditions the speed of detecting the Bluetooth receivers in the neighbouring area and also the speed of sending multimedia messages towards them. In an embodiment of the invention, for an internal processor **CPU** having a 3 GHz speed, a message of about 177 Kb is sent in 7 seconds.

The mounting of server **4** on the mobile advertising support frame **1** ensures both increased visibility and the contacting of new subjects extant in the traffic, consequently, a potentially greater audience. The transmitted multimedia message completes the visual advertising message displayed on the support frame **1** on the mobile platform represented by the trailer **2** hauled by the vehicle **3.** The support frame **1** displaying the advertising information will also be conceived with a mention inviting the passers-by to open the Bluetooth connection in order to receive a media message about the product or service also referred to in the advertisement displayed on the support **1.** Thus, there can be determined an as big as possible number of passers-by opening the Bluetooth connection of their receiver (mobile phone, computer etc), thereby increasing the audience.

The system according to the invention functions based on the technology known as "Bluetooth", which consists in using a short-range but relatively high frequency (of about 2.4 GHz) radio connection for interconnecting the mobile phones, computers etc. By means of this technology the users can have completely coordinated mobile phones or fixed calculation apparatuses.

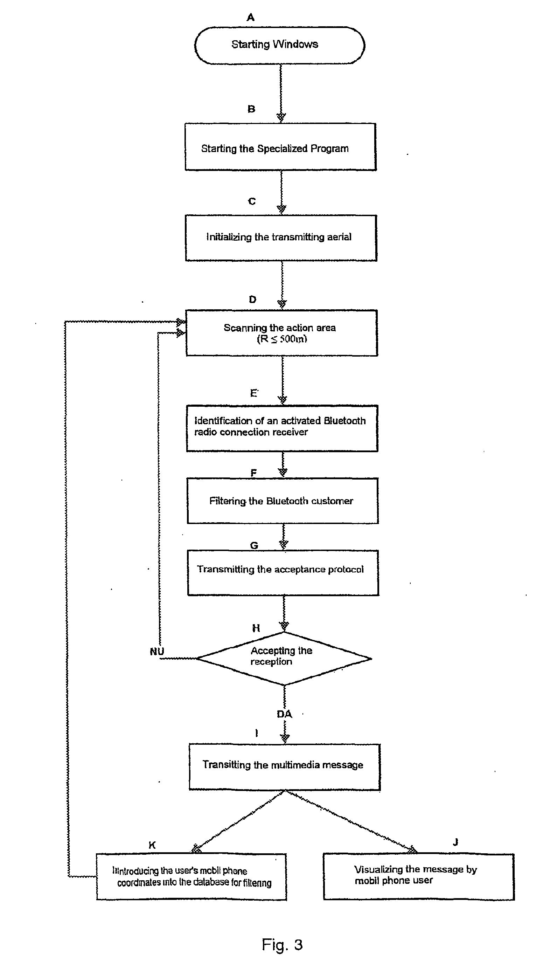

The method according to Figure 3 achieves the transmission of messages by using the Bluetooth (**BT**) protocol, and contains the following stages:
Stage **A** consists in loading the Windows 2000 X/P operating system and preparing the working server **4;**
Stage **B** consists in starting the specialized program that has already been loaded in the memory of processor **CPU** of server **4.** The specialized program is in fact a succession of subprograms existing separately, independently in Bluetooth technology. This program transmits the advertising clips **CP** installed on the hard disk **HDD** to the Bluetooth receivers **6;**
Stage **C** consists in initializing the transmitting aerial **5** wherethrough, in stage **D,** the area of action is scanned on a range R≤500 m;
Stage **E** consists in identifying a receiver **6** with active (Bluetooth) radio connection **CBT,** followed by stage **F** consisting in filtering the data of Bluetooth client **CBT;**
Stage **G** consists in transmitting the acceptance protocol towards the client that may accept the reception or may not accept it;
Stage **H** consists in accepting the reception by the client, followed by stage **I** consisting in transmitting the multimedia message;
Stage **J** consists in visualizing the message by the mobile phone user;
Stage **K** consists in introducing the coordinates of user's mobile phone **CBT** into the database for filtering.

The specialized program scans, by means of the aerial **BT 5,** a spherically defined area around the server **4,** having a range of about 500 m. The extent of this area depends on the technical characteristics of the aerial. After scanning the area there are identified the receivers **6** with active Bluetooth connection, then in the order of the proximity to the server **4,** the specialized program sends the advertising clips **CP** towards each receiver.

As it results from the flow chart of sending the messages, presented in Figure 3, in a first stage of the method according to the invention, a radio identifying signal is periodically emitted through the server **4** and the aerial **5** for the purpose of identifying those receivers **6** having active "Bluetooth" connection. The receivers **6** may be mobile phones, personal computers or computer networks, displays or video cameras.

In the second stage of the method, the advertising message supplier transmits, on the same route, a protocol requesting the acceptance by the subjects concerned, with a view to receiving advertising messages or other multimedia messages.

In the third and last stage of the method according to the invention and only in case of receiving the acceptance by the subjects concerned, the data package containing the advertising message (advertising spot) is broadcast to the receivers **6** of the subjects concerned.

By means of the aerial **5**, the server **4** can transmit messages or advertising video clips, correlated with the stationary image fixed on the support frame **1** as well as any kind of messages towards the receivers **6** extant on a range Rmax of up to 500 m relative to the transmitting aerial **5.**

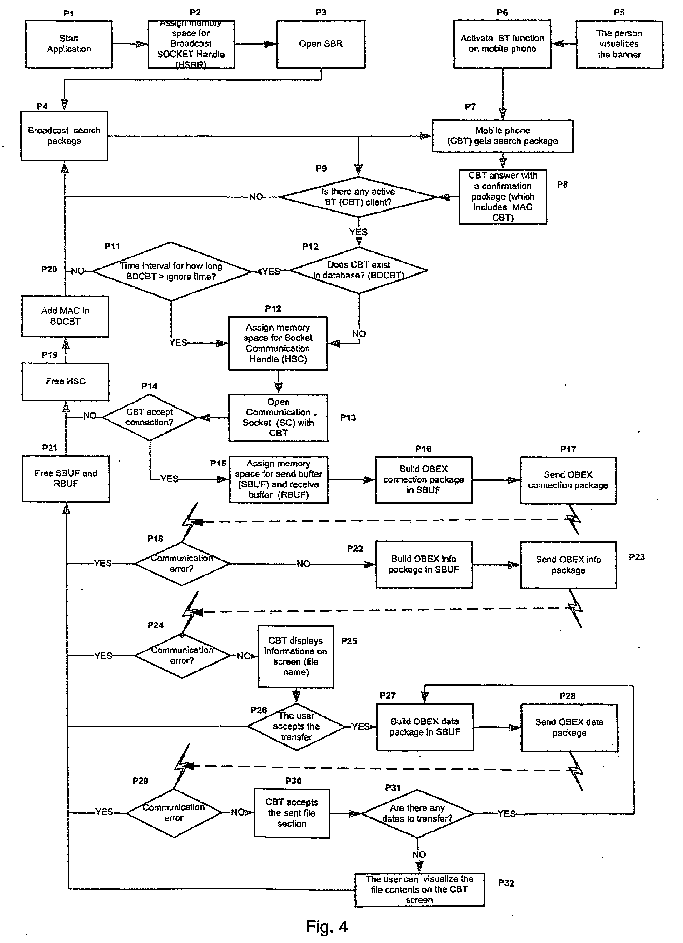

There is given hereinafter the description of the method for step-by-step transmission of messages, according to Figure 4.

After the Windows operating system has been loaded, the signal transmission device is prepared to transmit messages by starting the application, stage **P1**, in the range of action that may be of about 500 m, depending on the aerial model used and on the capacities of the receiving phones.

By step **P2** the aerial **5** is initialized by allocating a space in the memory RAM for a handle broadcast socket **SBR** wherethrough data are transmitted further on. In step **P3** the broadcast socket **SBR** is opened, thereby broadcast searching packages being sent through step **P4**.The searching packages are transmitted on a range of about 500 m to everybody (as if through a loudspeaker), and the first mobile phone **6** with BT function activated in steps **P5** and **P6,** called client BT (**CBT**), that responds is the first served in step **P7,** namely he receives the searching packages.

The client BT (**CBT**) may respond with a confirmation package in step **P8** or there is no CBT in the area and then the signal returns to step **P4** through step **P9** which checks again whether the clients CBT exist or not. In step **P8,** when the CBT responds, he sends a confirmation package including a media access control address **MAC** (Media Access Control) that is transmitted further on to step **P10** that checks whether the CBT can be found in the database **BDCBT,** where a list is generated for a certain period of time (for about 2 hours) which is configured before the start up.

In step **P11** there is checked whether the time ever since the CBT has been in the database **BDCBT** is longer than about 2 hours, in this case the message is transmitted further on to step **P12,** otherwise, the message returns to step **P4** of searching for new clients.

In step **P12** a memory space is allocated for the controlled communication through the handle socket communication **HSC,** and in step **P13** there is opened a socket communication **SC** with the client **CBT,** thereby a socket communication is opened therethrough a dialogue will be held with that client only. In step **P14** the client **CBT** receives a new message that remains on the mobile phone for a certain time predefined in the application (about 5 -20 seconds). At this moment there are two possibilities:
a) CBT does not respond or refuses to respond. In this case, the signal in step **P 14** lets free, in step **P19,** the handle socket communication **HSC** allocated previously in step **P12,** and further on, a MAC address is added into the database **BDCBT** through step **P20,** and through step **P4** it starts again searching for a client **CBT.**
b) CBT responds: in this case permission is given for building the message consisting of OBEX packages (Object Exchange - a communication protocol destined to transmit binary objects between special devices employing BT. OBEX is normally associated with the ad-hoc wireless connections). For this purpose, in step **P15** a space is allocated in the **RAM** memory for send buffer **SBUF** and receive buffer **RBUF,** thereafter, in step **P16** the OBEX connection package is built in **SBUF.** In step **P17** the OBEX connection package is sent from **SBUF** through socket towards CBT through BT, through step **P18.** The communication protocol is established between the client CBT and application (server 4), namely the maximum dimension of OBEX data packages and the OBEX protocol version wherethrough the communication is performed (for example the protocol version 1.5).

As an example, the application may send a message to the receiver, wherethrough it is set up that the OBEX version through which the communication is performed, is 1.0 and the maximum size of data packages is of 250 octets. In case the receiver does not recognize this protocol version or the dimension is too big, it will refuse the message.

When the OBEX connection package, step **P17,** is transmitted through BT towards CBT through step **P18,** there are two possibilities:
a) If in step **P18** there is a communication error, through step **P21** the memory allocated for send buffer **SBUF** and receive buffer **RBUF** is let free, in step **P19** the handle socket communication area **HSC** previously allocated in step **P12** is let free, and further on a **MAC** address is added into the database **BDCBT** through step **P20** and through step **P4** there starts again the search for a client CBT;
b) If there is no communication error in step P22, through step **P18,** there is continued by building an OBEX info package in **SBUF,** that is transmitted, through step **P23,** further on towards the clients CBT through step **P24.**

At this moment two possibilities may exist:
a) If in step **P24** there is a communication error, through step **P21** the memory allocated for **SBUF** and **RBUF** is let free, in step **P19** there is let free the handle socket communication area **HSC** allocated previously in step **P12,** and further on a **MAC** address is added into the data base **BDCBT** through step **P20,** and through step **P4** there starts again the search for a client CBT;
b) In case when in step **P24** a communication error does not occur, through step **P25** information (file name) is displayed on the user's phone display, with the question "Do you accept the file .... from .... (server name)?" In the next step **P26** the mobile phone (BT client - CBT) is transmitted the total dimension of the data package (for example 400 octets) and in case the information (video clip) is > 250 octets (for example 400 octets), the information will be transmitted in two or more steps. In step **P26,** if the user accepts the transfer, in the next step **P27** an OBEX data package is built in **SBUF** and the data package through step **P28** is sent further on towards the user through step **P29.**

In this step **P29** two possibilities may also exist:
a) If an error exists in step **P29,** through step **P 21** the memory allocated for **SBUF** and **RBUF** is let free, in step **P19** the handle socket communication area **HSC** previously allocated in step **P12** is let free and thereafter an address **MAC** is added into the database **BDCBT** through step **P20,** and in step **P4** a client **CBT** is searched for again;
b) In case there is no communication error in step **P29,** CBT accepts the file section transmitted through step **P30** and if there are data to be transferred through step **P31,** a skip is made to step **P27,** and thereby the whole information is transmitted. If there are no other data to be transferred, through step **P32,** the user may visualize the whole assembled information, then through steps **P21, P19, P20,** the step **P4** of searching for new clients **CBT** is resumed.

In case in step **P26** the user does not accept the transfer through steps **P21, P19, P20,** the step **P4** is resumed and the search for a new client **CBT** is started again.

For simplification, one of the three possibilities from below are understood by communication error:
1. The receiver **6** cannot be accessed physically any longer (it got out of the aerial range of action, it was closed etc);
2. The receiver **6** refuses the application command (for example a laptop using BT to communicate with a peripheral device, which will obviously refuse the data packages (it only receives packages from the peripheral device).
3. Any other error that may occur during the transmission (for example, the receiver **6** was stopped or the data flow was interrupted for reasons which depend on the producer etc).

There is given hereinafter the manner of forming the OBEX packages:
The OBEX packages are of the following form:

| Field name | OBEX command | Dimension of Parameters | OBEX command | Dimension of Parameters | ... | Parameters Command 1 | Parameters Command 2 | ... |
|---|---|---|---|---|---|---|---|---|
| Dimension (octets) | 1 | 2 | 1 | 2 | | Dimension of Parameters 1 | Dimension of Parameters 2 | |

The codes for OBEX commands are:

| Command | (HEXA) Code |
|---|---|
| OBEX_PUT | 02 |
| OBEX_PUT_FINAL | 82 |
| OBEX_CONNECT | 80 |
| OBEX_DISCONNECT | 81 |
| OBEX_CONTINUE | 90 |
| OBEX_SUCCESS | A0 |
| OBEX_VERSION | 10 |
| OBEX_CONNECT_FLAGS | 00 |

Packages:

**OBEX CONNECTION:**

| | | | | |
|---|---|---|---|---|
| OBEX_CONNECT | 07 | OBEX_VERSION | OBEX_CONNECT_ FLAGS | max_ dimension_package |

**INFO OBEX:**

| | | | | | | |
|---|---|---|---|---|---|---|
| OBEX_PUT | length_name_ file +13 | OBEX_ NAME | length_name_ file + 5 | name_file_ in_format_ UNICODE | OBEX_ LENGTH | file_length |

**DATA PACKAGES (except the last one):**

| | | | | |
|---|---|---|---|---|
| OBEX_PUT | package_dimension_ file+6 | OBEX_BODY | package_dimension_ file + 3 | file_package |

**LAST DATA PACKAGE:**

| | | | | |
|---|---|---|---|---|
| OBEX_PUT_FINAL | package_dimension _file + 6 | OBEX_END_OF_ BODY | package_dimension _file +3 | file_package |

The embodiment of the invention presented previously is not intended to be limitative, there exsisting also other manners of carrying out the method and the system without going beyond the scope of the present invention.

For example, in other embodiments, the support frame **1** may also be mounted directly on the vehicle, on buildings or inside commercial galleries. The vehicle **3** may be a bicycle, a motor cycle, a motor vehicle, a means of public transportation or a train.

## Claims

1. Method for transmitting advertising, visual or multimedia messages using the Bluetooth protocol for transmitting of some OBEX data packages, said method consisting in the following steps:
a.starting the operating system (A);
b. starting (B) the specialized program that has already been loaded in the memory of processor(CPU) of a server (4) and that transmits advertising clips (CP),installed in the hard disk (HDD), to some receivers (6) with activated Bluetooth function;
c. initializing (C) a transmitting aerial (5) by allocating spaces in the memory (RAM) for handle broadcast socket (SBR) and (P3)opening the same, allowing the transmission therethrough of broadcast searching packages;
d. scanning (D) the area of action on a certain range, in said area there being sent broadcast searching packages (P4) to the receivers(6) having activated Bluetooth function, which they (P7)receive and then check (P9) whether in the range of action there is any client (CBT) with
active Bluetooth function;
e. identification (E) of a client with active Bluetooth radio connection (CBT) by the fact that this responds with a confirmation package which includes a media access control address (MAC);
f. filtering(F) the data of the Bluetooth client (CBT), achieved by checking (P10) whether the data thereof are to be found in a database of the accessed clients (BDCBT), where a list is generated for a certain period of time that is set prior to starting, followed (P11) by checking whether the time ever since the data of respective client (CBT) are to be found in the database (BDCBT) is greater than the preset time, in which case the message is transmitted further on, otherwise, the message returns to step (P4) of searching for new clients (CBT);
g. transmitting the acceptance protocol (G) by the user that may accept the reception of media message or may refuse it ;
h. accepting the reception (H) by the user in which case (P26)there is started the building of the OBEX data package (P27) or non-accepting the reception by the user, in which case the signal returns to step (P4) of searching for new clients (CBT) ;
i. transmitting the multimedia message (I) to the user;
j. visualizing (J) the whole message by the user of receiver (6) with active Bluetooth function (P32) ;
k. introducing (K) the data of the client (CBT) into the database (BDCBT) employed for filtering the data thereof is carried out after visualizing the message (P32) by the user, by letting free the memory (RAM) allocated (P21 and P19) for the send buffer (SBUF),the receive buffer (RBUF) and for the handle socket communication (HCS), allocated (P12) previously, and by adding (P20) the media access control address (MAC) into the database (BDCBT), thereafter the signal returns to step (P4) of searching for new clients.

2. Method according to claim 1, **characterized in that** the transmission of the acceptance protocol (**G**) by the user consists in the following steps:
a. allocating a space (**P12**) in the memory (**RAM**) for handle socket communication (**HSC**);
b. opening the communication (**P13**) through socket communication (**SC**) with the Bluetooth client (**CBT**);
c. receiving (**P14**) a new message by the client (**CBT**), that remains on the mobile phone (6) for a certain time and to which, if this responds, permission is given for building the message that consists of OBEX packages, and if the client (**CBT**) does not respond in useful time, the signal is returned to step (**P4**) of searching for new clients (**CBT**), through step (**P19**) of letting free the communication area controlled by handle socket communication (**HSC**) and through step (**P20**) for adding the media access control address (**MAC**) into the database (**BDCBT**);
d. allocating a space (**P15**) in the memory (**RAM**) for the send buffer (**SBUF**) and receive buffer (**RBUF**);
e. building (**P16**) the OBEX connection package in the send buffer (**SBUF**)
f. sending (**P17**) the OBEX connection package from the send buffer (**SBUF**) through the socket to the client (**CBT**), through the transmitting aerial (**5**) of the Bluetooth application;
g. in case of accepting the message (**P18**), by the client (**CBT**), there starts the building (**P22**) of the OBEX info package in the send buffer (**SBUF**), and in case of non-recognizing the proposed protocol version, or the dimension of the package that is too large, or in case of some communication errors, the signal returns to the step **(P4)** of searching for new clients **(CBT)** through steps **(P21, P19, P20)** of introducing the client into the database **(BDCBT);**
h. sending (P23) the OBEX info package from the send buffer **(SBUF)** to the client **(CBT)** through the transmitting aerial **(5)** of the Bluetooth application;
i. in case the client decides **(P24)** to receive the message, the mobile phone **(6)** will display information **(P25)** on the screen, and in case of existence of a communication error, the signal will return to step **(P4)** of searching for new clients **(CBT)** through steps **(P21, P19, P20)** of introducing the client into the database **(BDCBT).**

3. Method according to claim 1, **characterized in that** the transmission of the multimedia message **(I)** to the user consists of the following steps:
a. building **(P27)** an OBEX data package in the send buffer **(SBUF);**
b. sending the OBEX data package **(P28)** from the send buffer **(SBUF)** to the user through the transmitting aerial **(5)** of the Bluetooth application;
c. the user decides **(P29)** to receive the message and the client **(CBT)** will accept the sent file section **(P30),** and if there exists a communication error, the signal returns to step **(P4)** of searching for new clients **(CBT)** through the steps **(P21, P19, P20)** of introducing the client into the database **(BDCBT);**
d. in case there are other data to be transferred **(P30),** a skip is made to step **(P27)** for building the OBEX data package in the send buffer **(SBUF),** thereby the whole information being transmitted.

4. System of transmitting messages adapted to implement the method of claim 1, comprising a support frame **(1)** that can be mounted on a trailer **(2)** hauled by a vehicle **(3),** or directly on the vehicle, on buildings or inside the commercial galleries, **characterized in that,** on the support frame **(1)** there is secured a server **(4)** provided with a transmitting aerial **(5)** for broadcasting the data package containing the advertising message towards the receivers **(6),** the server **(4)** being carried out as a specialized processor, consisting of a base plate **(BP)** containing a processor **(CPU)** and a memory **(RAM),** being connected through a cable **(CD)** to a hard **disk (HDD)** also containing an operating system **(SOW),** an advertising clip **(CP),** a diary file **(FJ)** and a database for the clients with active Bluetooth connection **(BDCBT),** the processor **(CPU)** containing another operating system **(SO),** a Bluetooth application **(ABT)** and a Bluetooth driver **(DBT),** receiving information from the application **(ABT),** sends and receives signals from a transmitting aerial **(5)** towards and from the receivers **(6)** with active Bluetooth connection.

5. System according to claim 4, **characterized in that** the memory **(RAM)** has memory spaces allocated for the broadcast socket **(SBR),** a communication socket **(SC),** a send buffer **(SBUF),** a receive buffer **(RBUF),** a Bluetooth application **(ABT)** and components of the operating system **(CSO).**

6. System according to claim 4, **characterized in that** the server **(4)** can be connected to the Internet and/or to a computer network, the receivers (**6**) of the users being mobile phones with built-in "Bluetooth"option, personal computers or computer networks, displays, video cameras having active "Bluetooth" connection.

## Patentansprüche

1. Methode für die Übermittlung von Werbe-, visuellen oder Multimedia-Botschaften durch einen Bluetooth Protokoll für die Übermittlung von Datenpakete gemäß OBEX Protokolle, die folgende Schritte enthält:
a. Betriebssystemstart (A);
b. Anschaltung (B) des spezialisierten Programms, welches schon im Speicher des Prozessors (CPU) eines Servers (4) geladen ist, und welches Werbeclips (CP), die auf der Festplatte (HDD) installiert sind, an Empfangsgeräte (6) mit aktiver Bluetooth Funktion übermittelt;
c. Initialisierung (C) einer Sendeantenne (5) durch Zuweisung von Speicherplätze im Arbeitsspeicher (RAM) für den Handle der Sendebuchse (SBR) und (P3) die Öffnung der Buchse, um die Übermittlung von Broadcast-Pakete zu erlauben;
d. Suchlauf (D) des Aktionsbereichs innerhalb gewisser Werte, Bereich in dem werden Broadcast-Pakete (P4) an Empfangsgeräte (6) mit aktiver Bluetooth Funktion übermittelt, die die Broadcast-Pakete (P7) erhalten und danach prüfen (P9) ob im Aktionsbereich Kunden (CBT) mit aktiver Bluetooth Funktion existieren;
e. Identifizierung (E) eines Kunden mit aktiver Bluetooth Radio Verbindung (CBT), indem er mit einem Bestätigungspaket, das eine MAC Adresse beinhaltet, antwortet;
f. Filterung (F) von Daten des Bluetooth Kundes (CBT), nach der Prüfung (P10) ob die Daten des Kundes sich in einer Datenbank mit aufgerufenen Kunden (BDCBT) befinden, wobei eine Liste generiert wird für eine bestimmte Dauer, die vor Beginn der Filterung etabliert wird und die von der Prüfung gefolgt wird (P11), ob die Dauer, seitdem sich die Daten des jeweiligen Kunden (CBT) in die Datenbank (BDCBT) befinden, länger als die voreingestellte Dauer ist, in welchem Fall die Botschaft weiter übermittelt, sonst die Botschaft zurück an Schritt (P4) betreffend die Suche von neuen Kunden (CBT) gesendet wird;
g. Übermittlung des Abnahmeprotokolls (G) durch den Benutzer, der den Empfang der Media-Botschaft erlauben oder verweigern kann;
h. Annahme des Empfangs (H) durch den Benutzer (P26), was zur Erstellung des Datenpakets gemäß OBEX Protokolle führt (P27) oder die Nichtannahme des Empfangs durch den Benutzer, in welchem Falle das Signal zurück an Schritt (P4), welches die Suche von neuen Kunden betrifft (CBT), gesendet wird;
i. Übermittlung der Multimedia-Botschaft (I) an den Benutzer;
j. Visualisierung (J) der ganzen Botschaft durch den Benutzers des Empfangsgerät (6) mit aktiver Bluetooth Funktion (P32) ;
k. Einleitung (K) der Daten des Kunden (CBT) in die Datenbank (BDCBT), die für die Filterung von Kundendaten benutzt wird, wird nach der Visualisierung der Botschaft (P32) durch den Benutzer durchgeführt, durch die Freigabe des Direktzugriffspeichers (RAM) zugewiesen (P21 and P19) für den Sendepuffer (SBUF), Empfangspuffer (RBUF) und für den Handle der Kommunikationsbüchse (HCS), vorher zugewiesen (P12), und durch die Hinzufügung (P20) einer MAC-Adresse in die Datenbank (BDCBT), danach wird das Signal an Schritt (P4) für die Suche von neuen Kunden gesendet.

2. Methode gemäß Anspruch 1, **dadurch gekennzeichnet dass** die Übermittlung des Abnahmeprotokolls (G) durch den Benutzer, enthält folgenden Schritte:
a. Zuweisung von Speicherplätze (P12) im Direktzugriffspeicher (RAM) für den Handle der Kommunikationsbüchse (HSC);
b. Öffnung der Kommunikation (P13) durch den Kommunikationssocket (SC) mit Bluetooth Kunde (CBT);
c. Annahme (P14) einer neuen Botschaft seitens den Kunden (CBT), die auf das Handy (6) für eine bestimmte Dauer gespeichert wird und sollte der Kunde antworten, erlaubt er die Erstellung der Botschaft, die aus Pakete gemäß OBEX Protokolle besteht, und ob der Kunde (CBT) nicht rechtzeitig antwortet, wird das Signal zurück an Schritt (P4) betreffend die Suche von neuen Kunden (CBT) gesendet, durch den Schritt (P19) für die Freigabe des Kommunikationsbereiches, der von dem Handle der Kommunikationsbüchse (HSC) kontrolliert ist, und durch den Schritt (P20) betreffend die Hinzufügung einer MAC-Adresse in der Datenbank (BDCBT);
d. Zuweisung von Speicherplätze (P15) im Direktzugriffspeicher (RAM) für den Sendepuffer (SBUF) und den Empfangspuffer (RBUF);
e. Erstellung (P16) des Verbindungspakets gemäß OBEX Protokolle im Sendepuffer (SBUF).
f. Übermittlung (P17) des Verbindungspakets gemäß OBEX Protokolle vom Sendepuffer (SBUF) durch die Buchse und zum Kunden (CBT), mittels der Sendeantenne (5) der Bluetooth-Anwendung;
g. sollte der Kunde (CBT) die Botschaft akzeptieren (P18), beginnt die Erstellung (P22) des Informationspakets gemäß OBEX Protokolle im Sendepuffer (SBUF), und wenn die Version des vorgeschlagenen Protokolls nicht anerkannt wird, oder das Paket zu groß ist, oder im Falle von Kommunikationsfehler, wird das Signal zurück an Schritt (P4) betreffend die Suche von neuen Kunden (CBT) gesendet, durch die Schritte (P21, P19, P20) betreffend die Eintragung von Kunden in der Datenbank (BDCBT);
h. Übermittlung (P23) des Informationspakets gemäß OBEX Protokolle vom Sendepuffer (SBUF) an den Kunde (CBT), mittels der Sendeantenne (5) der Bluetooth-Anwendung;
i. sollte der Kunde entscheidet (P24) die Botschaft zu empfangen, wird das Handy (6) die Informationen auf dem Bildschirm anzeigen (P25), und wenn es sich um Kommunikationsfehler handelt, wird das Signal zurück an Schritt (P4) betreffend die Suche von neuen Kunden (CBT) gesendet, durch die Schritte (P21, P19, P20) betreffend die Eintragung von Kunden in der Datenbank (BDCBT).

3. Methode gemäß Anspruch 1, **dadurch gekennzeichnet dass** die Übermittlung der Multimedia-Botschaft (I) zum Benutzer, die folgende Schritte enthält:
a. Erstellung (P27) eines Datenpakets gemäß OBEX Protokolle im Sendepuffer (SBUF);
b. Übermittlung des Datenpakets gemäß OBEX Protokolle vom Sendepuffer (SBUF) zum Benutzer mittels der Sendeantenne (5) der Bluetooth-Anwendung;
c. der Benutzer entscheidet (P29) die Botschaft zu empfangen und der Kunde (CBT) wird den übermittelten Teil der Botschaft akzeptieren (P30), und wenn es sich um Kommunikationsfehler handelt, wird das Signal zurück an Schritt (P4) betreffend die Suche von neuen Kunden (CBT) gesendet, durch die Schritte (P21, P19, P20) betreffend die Eintragung von Kunden in der Datenbank (BDCBT);
d. im Falle dass andere Daten übertragen werden müssen (P30), kann man direkt Schritt (P27) anwenden, der sich auf die Erstellung des Datenpakets gemäß OBEX Protokolle im Sendepuffer (SBUF) bezieht, und dadurch wird die ganze Information übertragen.

4. System für die Übermittlung von Botschaften, der die Methode gemäß Anspruch 1 implementiert, bestehend aus einem Stützgerüst (1) das auf einem Anhänger (2), der von einem Auto (3) geschleppt oder darauf montierbar ist, oder direkt im Auto, auf Gebäude oder innerhalb einer kommerziellen Galerie, **dadurch gekennzeichnet dass** auf dem Stützgerüst (1) ein Server (4) befestigt ist, der Server ist mit einer Sendeantenne (5) für die Übermittlung von Datenpaketen mit Werbebotschaften für die Empfängergeräte (6) vorgesehen und der (4) wurde als ein spezialisierter Prozessor gebaut, und besteht aus einer Hauptplatine (BP) mit einem Prozessor (CPU) und Direktzugriffspeicher (RAM), die durch einen Kabel (CD) an einer Festplatte (HDD) angeschlossen sind und die Festplatte enthält ein Betriebssystem (SOW), ein Werbeclip (CP), eine Logdatei (FJ) und eine Datenbank für Kunden mit aktiver Bluetooth Verbindung (BDCBT) und der Prozessor enthält ein anderes Betriebssystem (SO), eine Bluetooth-Anwendung (ABT) und ein Bluetooth -Treiber (DBT) und empfängt Informationen vor der Anwendung (ABT), sendet Signale mittels einer Sendeantenne (5) an Empfangsgeräte (6) mit aktiver Bluetooth Verbindung und empfängt Signale von solchen Empfangsgeräte.

5. System gemäß Anspruch 4, **dadurch gekennzeichnet dass** der Direktzugriffspeicher (RAM) Speicherplätze für die Übertragungsbuchse (SBR), für eine Kommunikationsbüchse(SC), für einen Sendepuffer (SBUF), für einen Empfangspuffer (RBUF), für eine Bluetooth-Anwendung (ABT), und für Betriebssystemteile (CSO) verteilt.

6. System gemäß Anspruch 4, **dadurch gekennzeichnet dass** der Server (4) kann an das Internet und/oder Computernetz angeschlossen werden, und die Empfangsgeräte (6) des Benutzers können Handys mit integrierter "Bluetooth" Option, Computer oder Computernetze, Kameras mit aktiver "Bluetooth" Verbindung sein können.

## Revendications

1. Méthode d'envoi de messages publicitaires, visuels ou multimédia par le protocole Bluetooth pour la transmission de certains paquets de données OBEX, ladite méthode consistant dans les étapes suivantes:
a. démarrage du système d'exploitation (A);
b. démarrage (B) du programme spécialisé déjà chargé dans la mémoire du processeur (CPU) d'un serveur (4) et qui transmet des clips publicitaires (CP), installé sur le disque dur (HDD), vers certains récepteurs (6) avec fonction Bluetooth activée ;
c. initialiser (C) une antenne d'émission (5) en allouant de l'espace dans la mémoire vive (RAM) pour la handle broadcast socket (SBR) et (P3) démarrer l'antenne d'émission, permettant ainsi la transmission de paquets broadcast de recherche ;
d. balayage (D) de la zone d'action sur une certaine plage, avec transmission, dans ladite zone d'action, de paquets broadcast de recherche (P4) vers les récepteurs (6) avec fonction Bluetooth activée, que ceux-ci (P7) reçoivent, puis vérifient (P9) si, dans la plage d'action, il y a de client (CBT) avec fonction Bluetooth activée ;
e. identification (E) d'un client avec connexion radio Bluetooth activée (CBT) par le fait que le client réponds par un paquet de confirmation qui inclut une adresse MAC (MAC) ;
f. filtrage (F) des données du client Bluetooth (CBT), en vérifiant (P10) si ces données se retrouvent dans une base de données des clients consultés (BDCBT), où une liste est créée pour une certaine période de temps établie avant le démarrage, puis (P11) en vérifiant si le temps, depuis que les données dudit client (CBT) se retrouvent dans la base de données (BDCBT), dépasse le temps préétabli, dans ce cas le message étant transmis plus loin ; sinon, le message revient à l'étape (P4) de recherche de nouveaux clients (CBT) ;
g. transmission du protocole d'acceptation (G) par l'utilisateur qui peut accepter la réception du message média ou la refuser ;
h. acceptation de la réception (H) par l'utilisateur, cas dans lequel (P26) commence la construction du paquet de données OBEX (P27), ou non-acceptation de la réception par l'utilisateur, cas dans lequel le signal revient à l'étape (P4) de recherche de nouveaux clients (CBT) ;
i. envoi du message multimédia (I) à l'utilisateur;
j. visualisation (J) du message en son entier par l'utilisateur du récepteur (6) avec fonction Bluetooth activée (P32) ;
k. l'introduction (K) des données du client (CBT) dans la base de données (BDCBT) utilisée pour le filtrage de celles-ci est réalisée après la visualisation du message (P32) par l'utilisateur, en libérant la mémoire vive (RAM) allouée (P21 et P19) pour le tampon d'émission (SBUF), le tampon de réception (RBUF) et pour la communication handle socket (HCS), allouée (P12) auparavant, et en ajoutant (P20) l'adresse MAC (MAC) dans la base de données (BDCBT), après quoi le signal revient à l'étape (P4) de recherche de nouveaux clients (CBT) .

2. Méthode conforme à la revendication 1, **caractérisée en ce que** la transmission du protocole d'acceptation (G) par l'utilisateur consiste dans les étapes suivantes :
a. allouer de l'espace (P12) dans la mémoire vive (RAM) pour la communication handle socket (HSC) ;
b. initialiser la communication (P13) par la communication par socket (SC) avec le client Bluetooth (CBT) ;
c. réception (P14) d'un nouveau message par le client (CBT), qui reste au téléphone portable (6) pendant un certain temps et auquel, en cas de réponse, permission est donnée de construire le message qui consiste en paquets OBEX ,et si le client (CBT) ne répond pas en temps utile, le signal revient à l'étape (P4) de recherche de nouveaux clients (CBT), par l'étape (P19) qui consiste dans la libération de la zone de communication contrôlée par la communication handle socket (HSC) et par l'étape (P20) afin d'ajouter l'adresse MAC (MAC) dans la base de données (BDCBT) ;
d. allouer de l'espace (P15) dans la mémoire vive (RAM) pour le tampon d'émission (SBUF) et le tampon de réception (RBUF) ;
e. construire (P16) le paquet de connexion OBEX dans le tampon d'émission (SBUF) ;
f. envoyer (P17) le paquet de connexion OBEX du tampon d'émission (SBUF) par la socket au client (CBT), par l'antenne d'émission (5) de l'application Bluetooth ;
g. en cas d'acceptation du message (P18) par le client (CBT), commence la construction (P22) du paquet de données OBEX dans le tampon d'émission (SBUF), et en cas de non-reconnaissance de la version de protocole proposée, ou de la dimension du paquet qui est trop grande, ou en cas de certaines erreurs de communication, le signal revient à l'étape (P4) de recherche de nouveaux clients (CBT) par les étapes (P21, P19, P20) d'introduction du client dans la base de données (BDCBT) ;
h. envoyer (P23) le paquet de données OBEX du tampon d'émission (SBUF) au client (CBT) par l'antenne d'émission (5) de l'application Bluetooth ;
i. au cas où le client décide (P24) de recevoir le message, le téléphone portable (6) affichera l'information (P25) sur l'écran, et en cas d'erreur de communication, le signal reviendra à l'étape (P4) de recherche de nouveaux clients (CBT) par les étapes (P21, P19, P20) d'introduction du client dans la base de données (BDCBT) ;

3. Méthode conforme à la revendication 1, **caractérisée en ce que** la transmission du message multimédia (I) à l'utilisateur consiste dans les étapes suivantes :
a. construire (P27) un paquet de données OBEX dans le tampon d'émission (SBUF) ;
b. envoyer le paquet de données OBEX (P28) du tampon d'émission (SBUF) à l'utilisateur par l'antenne d'émission (5) de l'application Bluetooth ;
c. l'utilisateur décide (P29) de recevoir le message et le client (CBT) acceptera la section de fichier envoyée (P30), et en cas d'erreur de communication, le signal revient à l'étape (P4) de recherche de nouveaux clients (CBT) par les étapes (P21, P19, P20) d'introduction du client dans la base de données (BDCBT) ;
d. au cas où il y a d'autres données à être transférées (P30), on saute à l'étape (P27) pour construire le paquet de données OBEX dans le tampon d'émission (SBUF), transmettant ainsi toutes les informations ;

4. Système de transmission des messages qui implémente la méthode de la revendication 1, composé d'un cadre porteur (1) qui peut être monté sur une remorque routière (2) traînée par un véhicule (3) ou directement sur le véhicule, sur des bâtiments ou à l'intérieur des centres commerciaux, **caractérisé en ce que**, sur le cadre porteur (1) est arrimé un serveur (4) doté d'une antenne d'émission (5) pour diffuser le paquet de données contenant le message publicitaire vers les récepteurs (6), le serveur (4) étant mis à exécution en tant que processeur spécialisé, composé d'une plaque de base (BP) contenant un processeur (CPU) et une mémoire vive (RAM), étant connecté à l'aide d'un câble (CD) à un disque dur (HDD) contenant aussi un système d'exploitation (SOW), un clip publicitaire (CP), un fichier journal (FJ) et une base de données pour les clients avec connexion Bluetooth activée (BDCBT), le processeur (CPU) contenant un autre système d'exploitation (SO), une application Bluetooth (ABT) et un pilote Bluetooth (DBT), recevant des informations de l'application (ABT), envoie et reçoit des signaux en provenance d'une antenne d'émission (5) vers et en provenance les récepteurs (6) avec connexion Bluetooth activée.

5. Système conforme à la revendication 4, **caractérisé en ce que** la mémoire vive (RAM) a des espaces mémoire alloués pour la broadcast socket (SBR), pour une socket de communication (SC), un tampon d'émission (SBUF), un tampon de réception (RBUF), une application Bluetooth (ABT) et pour les composants du système d'exploitation (CSO).

6. Système conforme à la revendication 4, **caractérisé en ce que** le serveur (4) peut être connecté à Internet et/ou à un réseau informatique, les récepteurs (6) des utilisateurs étant des téléphones portables avec option «Bluetooth» intégrée, des ordinateurs personnels ou des réseaux informatiques, des écrans, des caméscopes avec connexion «Bluetooth» activée.
